# EUROPÄISCHE PATENTANMELDUNG

(11) **EP 0 750 404 A2**
(43) Veröffentlichungstag der Anmeldung: **27.12.1996**
(21) Anmeldenummer: 96106397.1
(22) Anmeldetag: 24.04.1996
(51) Int. Cl.: H04B 1/707

(54) **Synchronisation in einem Spreizspektrumübertragungssystem mittels Referenzkanal**

(30) Priorität: 21.06.1995 DE 19522421
(71) Anmelder: Zumtobel Aktiengesellschaft, A-6850 Dornbirn (AT)
(72) Erfinder: Herter, Eberhard, Prof. Dipl.-Ing., 70184 Stuttgart (DE)
(74) Vertreter: Fleck, Hermann-Josef, Dr.-Ing.

(57) **Zusammenfassung**

Die Erfindung bezieht sich auf ein Verfahren zur Nachrichtenübertragung in einem Nutzkanal mit Spreiztechnik. Eine Synchronisation ist einfach und schnell dadurch erzielbar, daß die Übertragung mittels eines Referenzkanals synchronisiert und organisiert wird.

## Beschreibung

Die Erfindung bezieht sich auf ein Verfahren zur Nachrichtenübertragung in einem Nutzkanal mit Spreiztechnik.

Ein derartiges Verfahren ist in Jondral, Friedrich: Funksignalanalyse; Stuttgart, B.G. Teubner, Seiten 42 bis 50 beschrieben. Bei diesem bekannten Verfahren wird die Synchronisation von Sende- und Empfangsstation bei einem Nachrichtenübertragungssystem mit Bandspreizung mit Hilfe einer Autokorrelationsfunktion einer Hilfsfunktion g (t) vorgenommen, die z.B. aus pseudo-statistischen Codesequenzen gebildet ist und ein großes Zeit-Bandbreite-Produkt besitzt. Zu einer Synchronisation der Übertragung mittels eines gesonderen Referenzkanals und zu einer Organisation mittels des Referenzkanals macht diese Druckschrift keine Aussage.

In Carlson, A. Bruce: Communication Systems McGraw-Hill, 1988, Seiten 283 bis 286 ist angegeben, einen 19-kHz Pilotton für die Empfängersynchronisation zu verwenden, der frequenzmäßig außerhalb der informationstragenden Signalanteile liegt. Außerdem ist in dieser Druckschrift die Quadraturamplitudenmodulation mit Synchronisation erläutert. Von einer Anwendung eines Referenzkanals zur Organisation einer Übertragung ist in dieser Entgegenhaltung keine Rede. Auch sind zur Spreiztechnik keine Ausführungen gemacht.

Die DE 35 27 330 A1 schlägt eine Nachrichtenübertragung mit einem sogenannten verbindungsbegleitenden Organisationskanal vor, um eine Trennung zwischen Signalisierungs- und Nutzinformation zu vereinfachen. Der verbindungsbegleitende Organisationskanal ist als zentraler und allen Zeitkanälen eines Zeitmultiplexrahmens gemeinsamer Organisationskanal ausgeführt. Für die Synchronisierung werden Synchronisationssymbole verwendet, die in regelmäßigen Abständen über den Rahmen verteilt sind. Für manche Anwendungsfälle ist diese Vorgehensweise zu aufwendig und auch vom Aufbau her ungünstig.

Zunächst wird eine Vorbetrachtung zur bekannten Spreiztechnik gegeben. Beim bekannten Satellitenvielfachzugriffsverfahren SSMA (spread spectrum multiple access) nutzen verschiedene voneinander völlig unabhängige Nachrichtenverbindungen gleichzeitig die volle Bandbreite des Satellitentransponders, indem jeder Übertragung als "Träger" eine spezielle Codefolge zugeordnet wird, welche damit auch eine Adresse verkörpert.

In jeder der genannten Nachrichtenverbindungen wird das Nachrichtensignal auf Sende- und Empfangsseite in gleichartiger Weise mit der "zuständigen" Codefolge verknüpft. Als Ergebnis dieser Operation wird aus der dem Sender angelieferten kleinen Nachrichtenbandbreite b auf der Strecke die große Bandbreite B, und nach der empfangsseitigen Verknüpfung - richtige Synchronisation vorausgesetzt - erhält man das ursprüngliche Nachrichtensignal (Bandbreite b) wieder. Praktisch sind natürlich im Transponder die Nachrichtensignale der anderen Erdefunkstellen und eventuell leistungsstarke Störer ("jammer") dazugekommen; diese Beiträge werden im Empfänger durch die Verknüpfung mit der Codefolge gespreizt, d.h. ihre Leistung wird auf ein breites Band verteilt. Im schmalen Empfangsband b tragen daher diese Beiträge nur um den Faktor b/B gemildert zum Störgeräusch bei.

Bei n Stationen hat jede Station (n-1) "systeminterne" Störer, dazu kommen eventuell (böswillige) Störer von außen mit großer Leistung. Um für den Empfang des Nutzsignals trotzdem noch einen vernünftigen Störabstand sicherzustellen, werden insbesondere bei militärischen Systemen große "Spreizgewinne" realisiert, z.B. 40 dB; d.h. aber, der Faktor B/b muß sehr groß sein.

Verglichen mit der simplen direkten Übertragung des schmalen Bandes b, hat die gespreizte Übertragung gravierende Vorteile:
- Ist der realisierte Spreizgewinn hinreichend groß, so kann die Nachrichtenübertragung mit hinreichend abgesenktem Pegel ("unterlagert") in Frequenzbereichen arbeiten, die durch andere Dienste belegt sind.
- Bei Übertragung ohne Spreizung kann es sein, daß der notwendige Störabstand nur mit einem Sendepegel erreicht werden kann, welcher gegebene Grenzwerte (z.B. Funkstörgrad) verletzt. Hier genügt eventuell schon eine relativ geringe Bandspreizung, um die Verletzung der Norm zu vermeiden.
- Sehr häufig muß mit leistungsstarken Sinusstörern gerechnet werden, deren Frequenz je nach Installation unterschiedlich und auch zeitlich variabel sein kann. Man weiß deshalb nicht, wo man ein schmales Nachrichtenband b hinlegen soll; fällt der Sinusstörer in dieses Band, so wird die Übertragung unmöglich. Bei der gespreizten Übertragung ist es gleichgültig, welche Frequenzen die ins Spreizband B fallenden Sinusstörer haben; sie liefern zwar grundsätzlich Störbeiträge, die aber nur um den Faktor b/B gemildert eingehen.

Es gibt also viele Motivationen für die Spreiztechnik.

Andererseits ergeben sich im Zusammenhang mit der Spreiztechnik aber auch Probleme:
- Die empfangsseitige Synchronisation nimmt je nach Randbedingungen einige Zeit in Anspruch und erfordert relativ aufwendige Schaltungen ("Delay-Locked-Loop" o.ä.)
- Die verschiedenen Codefolgen müssen untereinander hinreichend kleine Kreuzkorrelationsfunktionen haben, damit die Nachrichtenverbindungen hinreichend entkoppelt sind.

Um den Hintergrund der Erfindung weiter zur erläutern, wird im folgenden zunächst ein Nachrichtenübertragungssystem auf 230-V-Leitungen beschrieben. (Vorsorglich wird darauf hingewiesen, daß der Gegenstand der Erfindung unabhängig vom Übertragungsmedium, also nicht etwa an Leitungen gebunden ist.)

An die Stelle des Satellitentransponders tritt also eine Leitung, an die alle Stationen angeschlossen sind. Nimmt man als Beispiel einen Bus von 200 m Länge, so ist zunächst offenkundig, daß für die Synchronisation einfachere Bedingungen bestehen als beim Satelliten: Die Laufzeit ist sehr klein, damit ist auch die absolute Größe von Laufzeitunterschieden klein. Allerdings müssen nun eine Reihe von Effekten beachtet werden, welche die Satellitenübertragungsstrecke im freien Raum nicht kennt:
- Reflexionen verschiedenster Art (falsche oder gar fehlende Abschlüsse, Stoßstellen durch Stationsanschlüsse und Abzweige, Wellenwiderstandsschwankungen)
- Dämpfungs- und Laufzeitverzerrungen.

Benutzt man gar eine 230-V-Leitung, so stellen die dort angeschlossenen Verbraucher (z.B. elektrische Maschinen, Vorschaltgeräte von Leuchtröhren usw.) die Nachrichtenübertragung vor große Probleme:
- Erzeugung neuer Frequenzen (Dauerstörer; Impulsstörer z.B. durch Lastsprünge).
- Eventuelle Parallelkondensatoren an den Verbrauchereingängen schließen höhere Frequenzen kurz (d.h.: extreme Dämpfungsverzerrung).
- Beim An- und Abschalten ändern sich die ohm'sche und/oder kapazitive Belastung des Busses, d.h. das Leitungsgebilde ist ein zeitvarianter Phasenschieber.

In vielen Fällen sind deshalb große Spreizbandbreiten B problematisch (weil die diversen Verzerrungen eine Degradation verursachen, welche den theoretisch möglichen Störabstandsgewinn wieder zunichte macht) oder nicht möglich (weil höhere Frequenzen unterdrückt werden). Bei gegebenen Anforderungen an eine (Mindest-)Nachrichtenbandbreite b wird es schließlich unmöglich, mehrere unabhängige Nachrichtenübertragungen (mit unterschiedlichen Codefolgen) gleichzeitig zu betreiben; d.h., der Ausdruck SSMA (MA = multiple access) trifft nicht mehr zu. Was bleibt, ist eine simple Bandspreizung, die bekanntlich auf verschiedene Arten bewirkt werden kann, z.B. neben der unten beschriebenen "direct sequence" (Multiplikation mit Pseudo-Noise-Folge) durch Frequency Hopping oder Chirp-Signale.

Der Erfindung liegt die Aufgabe zugrunde, ein Verfahren zur Nachrichtenübertragung in einem Nutzkanal mit Spreiztechnik bereitzustellen, mit dem ohne großen Aufwand eine Erstsynchronisation schnell erreichbar und eine genaue Synchronisation insgesamt mit einfachen Mitteln erzielt und aufrechterhalten wird.

Diese Aufgabe wird mit den Merkmalen des Anspruchs 1 gelöst.

Demnach ist also vorgesehen, daß die Übertragung mittels eines Referenzkanals synchronisiert und organisiert wird und daß im Anschluß an die Synchronisation des Referenzkanals eine Feinsynchronisation des Nutzkanals durchgeführt wird. Mit diesen Maßnahmen wird mittels des Referenzkanals nicht nur eine schnelle Erstsynchronisation, sondern auch eine Organisation der Übertragung erreicht. Nach der Synchronisation des Referenzkanals kann dann mit einfachen, jeweils geeigneten Maßnahnahmen die Feinsynchronisation des Nutzkanals durchgeführt werden. Diese gestufte Vorgehensweise der Synchronisation hat den zusätzlichen Vorteil, daß die Feinsynchronisation bei Bedarf wieder schnell vorgenommen werden kann. Ändert sich beispielsweise durch An-/Abschalten von Verbrauchern bei Verwendung eines zeitvarianten 230-V-Busses die elektrische Länge des Busses, so ändert sich die empfangsseitige Phasenlage einer Code-Folge. Der Empfänger kann einen derartigen Ausfall der Feinsynchronisierung sofort feststellen und diese ohne großen Aufwand wiedergewinnen.

Der Referenzkanal kann auf unterschiedliche Weise realisiert werden, wie zum Beispiel:
- Leistungsstarker Träger, z.B. PSK-moduliert, in einem dafür zugelassenen Exklusivband.
- Mehrfrequenzcode, mit entsprechend kleinerem Pegel der Einzelfrequenzen, die mit Rücksicht auf 50-Hz-Oberwellen und bekannte andere Störer geeignet plaziert werden.
- Einfache Spreiztechnik, die in sich sehr schnell synchronisiert, z.B. Chirp.

(Im Zusammenhang mit dem Stichwort Synchronisation soll kurz darauf hingewiesen werden, daß es bei Systemen auf 230-V-Leitungen naheliegt, für verschiedenartige Funktionen die 50-Hz-Netzfrequenz heranzuziehen. Im Hinblick auf eine Funktion der Nachrichtenübertragung auch bei Netzausfall werden solche Möglichkeiten nicht in Betracht gezogen.)

Es ist plausibel, aber nicht zwingend, die Referenzkanalfrequenz(en) außerhalb des Spreizbandes B anzuordnen.

Weitere vorteilhafte Ausgestaltungen sind Gegenstand der Unteransprüche.

Die Erfindung wird nachfolgend anhand eines Ausführungsbeispiels unter Bezugnahme auf die Zeichnungen näher erläutert. Es zeigen:
**Fig. 1** eine Konfiguration zur Nachrichtenübertragung über ein Starkstromnetz und
**Fig. 2** eine Darstellung der verwendeten Kanäle im Frequenzbereich.

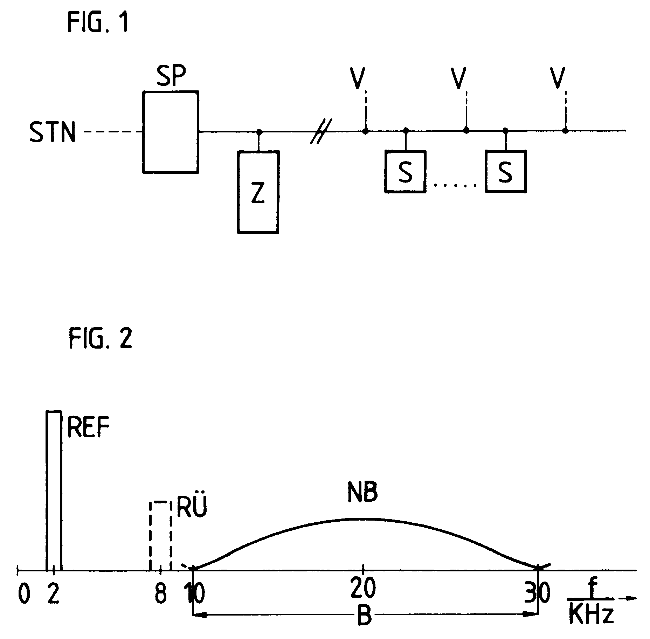

Als Anwendungsbeispiel wird nun die Konfiguration nach Fig. 1 betrachtet. Die Fig. 1 zeigt ein Starkstromnetz STN mit einem Sperrfilter SP, einer Zentralen Z, Stationen S und Abzweigungen zu Starkstromverbrauchern V.

Realisiert werden muß die Übertragung von der Zentralen Z zu der/den Station(en) S; als Option kann es auch den Wunsch für eine Übertragung von einer Stations S zur Zentralen Z geben. Nicht gefordert ist eine Übertragung zwischen den Stationen S.

Verschiedene Kanäle könnten beispielsweise wie in Fig. 2 realisiert werden. Ein als Option eventuell benötigter Rückkanal RÜ von der Stations S zu der Zentralen Z könnte z.B. in Zeitgetrenntlage im Referenzkanal REF untergebracht werden; in der Fig. 2 gezeigt ist ein Rückkanal RÜ in Frequenzgetrenntlage. Außerdem ist ein gespreizter Nutzkanal NB dargestellt.

Bevor auf die erfindungsgemäße Zusammenarbeit von Referenzkanal REF und Nutzkanal NB eingegangen wird, ist es zweckmäßig, beispielhaft einige konkrete Annahmen zur Struktur des Referenzkanals REF zu machen. Die Bruttobitrate sei 200 bit/s. Es werden einheitliche aneinander anschließende Rahmen der Länge 5 byte (40 bit) verwendet. Diese Länge entspricht der eines Kopffeldes (header) bei an sich bekannter ATM (asynchronous transfer mode). Wie dort möge das letzte (5.) Byte einen aus dem Inhalt der ersten vier berechneten CRC-Code (CRC = cyclic redundancy check) beinhalten (Bezeichnung im ATM-Kopffeld: HEC, header error check).

Jeder Rahmen enthält Synchronisierinformation, entweder als expliziert ausgewiesenen Synch-Code oder (nach dem Vorbild von ATM) implizit durch Mitbenutzung des HEC. Der Rest des Rahmens ist für die Übertragung einer Stationsadresse und eventuell einiger Steuerbits verfügbar.

Es müßte untersucht werden, ob unter den speziellen Randbedingungen (Störungen) der 230-V-Übertragung und bei den Gegebenheiten in der Stations S die implizite Synchronisation an sich und deren Dimensionierung entsprechend dem ATM-Kopffeld zweckmäßig ist; grundsätzlich anwendbar ist sie auf jeden Fall. Da eine neu angeschaltete Station S im Referenzkanal REF synchronisiert und adressiert ist, wenn zum ersten Mal gerade ein kompletter Rahmen in einem dafür vorgesehenen Schieberegister steht, dauert es im Mittel nur 300 ms (min. 200 ms, max. 400 ms) bis die Station S handlungsfähig ist. Dies gilt unter der Voraussetzung, daß in dem in Rede stehenden Rahmen keine oder nur soviel Störungen aufgetreten sind, daß die Möglichkeiten des jeweils verwendeten CRC zur Fehlerkorrektur nicht überfordert werden. Andernfalls dauert die Referenzkanalsynchronisation eben eine Rahmendauer (200 ms) länger.

Bei den in Betracht gezogenen Anwendungen gibt es nur wenige hochgradig zeitkritische Steuerinformationen; diese werden sämtlich im Referenzkanal REF übertragen. Häufig gibt es überhaupt nur eine: Aufforderung, im Rückkanal RÜ zu senden. Da dort nur die Station S senden darf, die im Referenzkanal REF synchronisiert ist und ihre Adresse (plus eventuell verwendeter Steuerbits) erkannt hat, gibt es keine Kollisionsprobleme. Hat man einen gesonderten Rückkanal RÜ vorgesehen, so wird dieser nur nach einer Aufforderung der Zentralen Z an die Station S genutzt. Falls der Rückkanal RÜ darüberhinaus noch Übertragungskapazität hat, liegt es nahe, ihn zu den übrigen Zeiten allen Stationen als ALOHA-Kanal zur Verfügung zu stellen. Dieses ALOHA könnte z.B. dazu benutzt werden, daß eine Station S spontan der Zentrale Z ihre Adresse mitteilt, um dadurch einen Sendeaufruf von der Zentralen Z zu der Station S wie oben zu provozieren.

Der Nutzkanal N ist bis jetzt nicht näher betrachtet werden. Zur Realisierung der Spreiztechnik sind in der Zentrale Z wie in jeder Station S gleichartig aufgebaute (nicht gezeigte) pn-Generatoren (Erzeugung digitaler Pseude-Noise-Folgen durch in geeigneter Weise rückgekoppelte Schieberegister) vorgesehen. Der pn-Generator der Zentrale Z wird jeweils zu Beginn des Referenzkanalrahmens auf einen verabredeten Wert (Schieberegisterinhalt) gesetzt; die Stationen S, die Referenzkanalsynchronisation erreicht haben, machen dasselbe. Die Zentrale Z und alle Stationen S betreiben ihre Taktgeneratoren mit gleicher, verabredeter Taktfrequenz. Wenn der pn-Generator einer Station S, natürlich unter Berücksichtigung der Laufzeit, mit dem Zentralen-Generator synchron läuft, funktioniert die Korrelation. Im schmalen Band b hinter einem empfangsseitigen vorgesehenen Korrelator ergibt sich ein Nutzsignal oberhalb einer Schwelle.

Natürlich wäre es ein Zufall, wenn mit der Referenzkanalsynchronisation auch schon die Nutzkanalsynchronisation erreicht wäre: Im oben genannten Beispiel ist ein Referenzkanalbit 5 ms und ein Chip der pn-Folge 0,1 ms lang. Es ist also in der Regel noch eine Feinsychronisation notwendig. Zu diesem Zweck variiert der Empfänger den Beginnzeitpunkt seiner pn-Folge (digital um ganze Taktbreiten, ggf. analog). Ist die Korrelation einmal erreicht, so kann sich die Station S den vorliegenden Taktversatz merken.

Zusammenfassend kann man sagen, daß die erfindungsgemäße Zusammenarbeit von Referenzkanal REF und Spreizsystem zu folgenden günstigen Eigenschaften des Gesamtsystems führt:
- Der Referenzkanal REF ermöglicht eine schnelle und sichere Systemorganisation und (Grob-) Synchronisation; außerdem lassen sich einige zeitkritische Steuerinformationen übertragen.
- Die Spreiztechnik im Nutzkanal N, die aus den verschiedensten Gründen wünschenswert sein kann, wird durch die Hilfestellung des Referenzkanals REF extrem einfach.
- Ein entscheidender Vorteil der hier beschriebenen Spreiztechnik für den Einsatz auf zeitvarianten 230-V-Bussen ist, daß der Empfänger die Eigenschaften des Übertragungskanals selbst beurteilen und optimieren kann! Der für den Empfang des Spreizsignals ohnehin notwendige Korrelator habe bis jetzt ein gutes Ausgangssignal "oberhalb der Schwelle" geliefert. Ändert sich nun (z.B. durch An-/Abschalten von Verbrauchern) die elektrische Länge des Busses, so hat die empfangsseitige erzeugte pn-Folge nicht mehr die richtige Phasenlage. Die Korrelation "steigt aus". Der Empfänger kann, insbesondere bei geeigneter Codierung im Nutzkanal N, den Ausfall sofort feststellen und durch Start eines neuen Suchlaufs die Feinsychronisation wieder gewinnen. Im gegebenen Fall kann ein relativ einfacher regelrechter Delay-Lock-Loop vorgesehen sein, der die pn-Takt-Phase kontinuierlich auf dem optimalen Wert hält.

## Patentansprüche

1. Verfahren zur Nachrichtenübertragung in einem Nutzkanal mit Spreiztechnik,
dadurch gekennzeichnet,
daß die Übertragung mittels eines Referenzkanals synchronisiert und organisiert wird und
daß im Anschluß an die Synchronisation des Referenzkanals eine Feinsynchronisation des Nutzkanals durchgeführt wird.

2. Verfahren nach Anspruch 1,
dadurch gekennzeichnet,
daß die Nachrichtenübertragung über ein Starkstromnetz erfolgt.

3. Verfahren nach Anspruch 1 oder 2,
dadurch gekennzeichnet,
daß der Nutzkanal und der Referenzkanal in Frequenzgetrenntlage vorgesehen sind.

4. Verfahren nach einem der vorhergehenden Ansprüche,
dadurch gekennzeichnet,
daß zur Übertragung in Gegenrichtung ein bzgl. des Referenzkanals (REF) und/oder des Nutzkanals (NB) in Zeitgetrenntlage oder Frequenzgetrenntlage betriebener Rückkanal (RÜ) vorgesehen ist.

5. Verfahren nach einem der vorhergehenden Ansprüche,
dadurch gekennzeichnet,
daß der Referenzkanal (REF), der evtl. Rückkanal (RÜ) sowie der Nutzkanal (NB) in einem Frequenzbereich unter 100 kHz angesiedelt sind.

6. Verfahren nach einem der vorhergehenden Ansprüche,
dadurch gekennzeichnet,
daß für den Referenzkanal (REF) eine Bitrate kleiner als 1000 bit/s gewählt wird.

7. Verfahren nach einem der vorhergehenden Ansprüche,
dadurch gekennzeichnet,
daß für den Referenzkanal (REF) einheitlich aneinander anschließende Rahmen der Länge fünf byte (= 40 bit) jeweils mit Synchronisierinformation verwendet werden und
daß das letzte Byte einen aus dem Inhalt der ersten vier byte berechneten CRC-Code beinhaltet.

8. Verfahren nach einem der vorhergehenden Ansprüche,
dadurch gekennzeichnet,
daß in dem Referenzkanal (REF) Steuerinformationen und Informationen zur Stationsadresse übertragen werden.

9. Verfahren nach einem der Ansprüche 4 bis 8,
dadurch gekennzeichnet,
daß der Rückkanal (RÜ) nur nach einer Aufforderung durch eine Zentrale (Z) von einer angesprochenen Station (S) benutzt wird.

10. Verfahren nach einem der Ansprüche 4 bis 9,
dadurch gekennzeichnet,
daß der Rückkanal (RÜ) als ALOHA-Kanal zur Verfügung gestellt wird, wenn keine Aufforderung der Zentrale (Z)an eine Station (S) für eine Rückantwort vorliegt.

11. Verfahren nach einem der vorhergehenden Ansprüche,
dadurch gekennzeichnet,
daß in der Zentrale (7) und in jeder Station (S) mittels pn-Generatoren digitale Pseudo-Noise-Folgen erzeugt werden,
daß der pn-Generator der Zentrale jeweils zu Beginn eines Referenzkanal-Rahmens und die Stationen (S), die Referenzkanalsynchronisation erreicht haben, auf einen verabredeten Wert gesetzt werden,
daß die Zentrale (Z) und alle Stationen (S) in diesen vorgesehenen Taktgeneratoren mit gleicher, verabredeter Taktfrequenz betreiben,
daß bei Erreichen der Synchronisation des pn-Generators der Zentrale (Z) und des pn-Generators einer Station (S) eine entsprechende Korrelation erreicht wird und
daß in einem schmalen Band b hinter einem empfangsseitig vorgesehenen Korrelator ein Nutzsignal oberhalb einer Schwelle erhalten wird.

12. Verfahren nach Anspruch 12,
dadurch gekennzeichnet,
daß zur Fein-Synchronisation der Empfänger den Beginnzeitpunkt der pn-Folge seines pn-Generators variiert, bis die gewünschte Korrelation erzielt ist.

13. Verfahren nach einem der vorhergehenden Ansprüche,
dadurch gekennzeichnet,
daß bei Änderung der Phasenlage der empfangsseitigen pn-Folge infolge einer Störung im Nutzkanal die Fein-Synchronisation des Nutzkanals gestartet wird.

14. Verfahren nach Anspruch 14,
dadurch gekennzeichnet,
daß die Phasenlage der pn-Folge mittels Delay-Lock-Loop kontinuierlich auf dem optimalen Wert gehalten wird.
